# EUROPEAN PATENT SPECIFICATION

(11) **EP 4 226 001 B1**
(45) Date of publication and mention of the grant of the patent: **09.12.2026**
(21) Application number: 21816187.5
(22) Date of filing: 05.10.2021
(51) Int. Cl.: E04F 13/08, F16B 13/04, F16B 5/02

(54) **SPACER SYSTEM FOR ADJUSTABLE POSITIONING OF PANELS OR SLABS**
ABSTANDSHALTERSYSTEM ZUR EINSTELLBAREN POSITIONIERUNG VON PANEELEN ODER PLATTEN
SYSTÈME D'ESPACEMENT POUR LE POSITIONNEMENT RÉGLABLE DE PANNEAUX OU DE DALLES

(30) Priority: 08.10.2020 IT 202000023713
(43) Date of publication of application: 16.08.2023
(73) Proprietor: SESTITO, Nicola, 88064 Chiaravalle Centrale (IT)
(72) Inventor: SESTITO, Nicola, 88064 Chiaravalle Centrale (IT)
(86) International application number: PCT/IT2021/050308
(87) International publication number: WO 2022/074696

(56) References cited:
- CN-U- 211 396 423
- DE-A1- 10 327 312
- DE-U1- 29 705 576
- US-A1- 2014 123 468

## Description

The present invention is related to a spacer system for the placement of panels or plates.

The technical field of reference is that of positioning devices, fasteners, construction systems, with particular reference to the construction sector of construction with the use of plasterboard panels, wood or raw or finished materials of various construction nature.
- As is well known, masonry works in traditional construction, especially in brick, lack verticality and flatness. Defects can have values ranging from a few millimeters up to one and a half centimeters and even more. The main defects present in traditional building works are:- Variations of positive or negative verticality, or both, with respect to the theoretical vertical of reference or to the vertical plane parallel to the wall and perpendicular to the theoretical plane horizontal to a floor;
- Recess or protrusion or both, at some points of the wall, due to the very nature of the brick not perfectly tailored or squared, or to the nature of the work made with joining mortar which in turn generates fluidity of laying and a settling consequently out of vertical plane. Such a defect can vary between a few millimeters up to one centimeter.

In order to limit the visibility of such defects and give a homogeneous, pleasant and planar appearance to the surface of a wall, a layer of mortar and finishing plaster is typically applied. This work requires processes with variable times and costs depending on the finishing choices and the complexities encountered. An example of a typical spacer system as outlined in the preamble of claim 1 can be found in CN 211396423.

The purpose of this invention is to provide a system that allows to effectively reduce time and costs related to the correction of imperfections of a wall, or in general the finishing coating of a surface and having, therefore, characteristics such as to overcome the limits that still influence the current construction systems, with reference to the known technique. Also advantage of the invention is the possibility of coating horizontal surfaces such as ceilings.The purpose of the present invention is to provide a spacer system for the placement of panels or plates that is practical in use and economical.

According to the present invention, a spacer system for panels or plates is made, as defined in claim 1.For a better understanding of the present invention, a preferred form of realization is now described, purely by way of non-limiting example, with reference to the attached drawings, in which:
- Figures 1.a, 1.b, 1.c, 1.d, 1.e show a spacer system, according to the invention;
- Figures 2.a, 2.b, 2.c, 2.d, 2.e show a second form of implementation of a spacer system, according to the invention;
- Figures 3.a, 3.b, 3.c, 3.d, 3.e show a third form of implementation of a spacer system, according to the invention;
- Figures 4.a, 4.b, 4.c, 4.d, 4.e show a fourth form of implementation of a spacer system, according to the invention.
- Figures 5.a, 5.b, 5.c, 5.d, 5.e show a fifth form of implementation of a spacer system, according to the invention.

With reference to these figures, five forms of realization of a spacer system 100, 200, 300, 400, 500 according to the invention are shown for illustrative and non-limiting purposes.

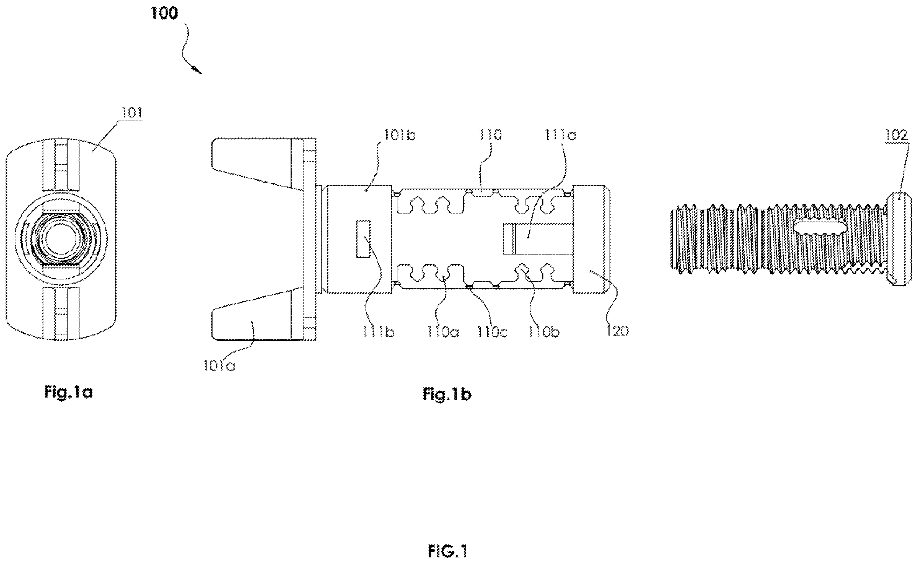

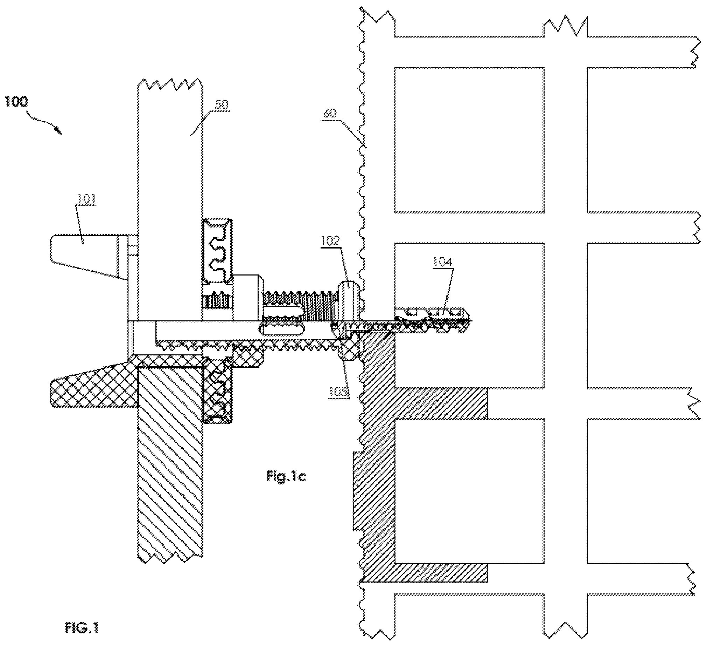

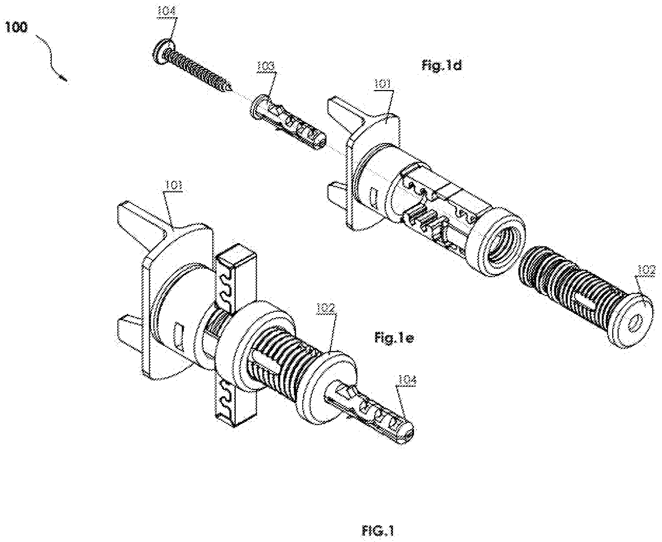

In particular, the spacer system 100, 200, 300, 400, 500 for the positioning of panels or slabs is suitable for the adjustable fixing of at least one panel 50 to a supporting structure 60, shown in figures 1.c, 2.c, 3.c, 4.c, 5.c, and includes:
- a first element 101, 201, 301, 401, 501, which can be positioned in correspondence with at least one hole and / or edge of the panel 50, and comprising an adjustment means 101a, 201a, 301a, 401a, 501a adapted to allow adjusting the distance reciprocal between the panel 50 and the supporting structure 60 by acting on the spacer system 100, 200, 300, 400, 500, and a locking element 101b, 201b, 301b, 401b, 501b adapted to prevent the spacer system 100, 200, 300 , 400, 500 in use can slip out of its seat, or hole, made in the panel 50; - a spacer element 102, 202, 302, 402, 502 having at one end a perforated head and a through hole, which can be fixed to the supporting structure 60;
- fastening means, preferably a plug and / or a screw, suitable for being inserted in at least one through hole of the first element 101, 201, 301, 401, 501 and in at least one through hole of the spacer element 102, 202, 302 , 402, 502. According to a first embodiment, shown in Figure 1, the spacer system 100 comprises a first element 101 in which the adjustment means 101a consists of a plate having two protruded portions, or adjustment wings, which in use by rotating allow to adjust the distance between the first element 101 and the spacer element 102 and consequently between the panel 50 and the bearing structure 60 constrained thereto. The first element 101 comprises the locking element 101b which consists of a pair of folding wings 110 which can be alternately positioned in a first open position, shown in figure 1.b, when the first element 101 is inserted into a hole in the panel 50, and in a second closed position, shown in Figure 1.e, when they are folded and positioned parallel to the panel 50 itself, to prevent the first element 101 from being pulled out of the hole. The pair of folding wings 110 comprises on one side of them a plurality of protrusions 110a, 110b for the mutual interlocking of each portion of the folding flap when placed in the closed position. In particular, as shown in Figure 1b, the pair of folding wings 110 consists of two elements, or folding wings, which extend from a first end of the locking element 101b integral with the adjustment mean 101a, to a second end thereof. , opposite to the first, which has a threaded perforated head 120. Each folding wing of the pair of folding wings 110 has a first surface facing outwards which is substantially flat, and a second surface facing inwards provided with a plurality of protrusions 110a , 110b interlocking together, and a pair of intermediate grooves 110c designed to allow each flap to fold back on itself, passing into a closed position and generating two bodies opposite each other and, in use, parallel to the surface of the panel 50, as shown in figure 1c. According to an aspect of the invention, the first element 101 is centrally perforated and comprises at its first end the adjustment means 101a, which consists of a plate equipped with adjustment fins and at its second end, opposite the first, a threaded perforated head 120 internally suitable for the insertion of the spacer element 102. The threaded perforated head 120, of the first element 101, is internally threaded and equipped with a pair of interlocking elements 111a able to fit into at least one housing 111b obtained on the lateral surface of the first end of the locking element 101b, when the pair of folding wings 110 is in the closed position. In this way the locking of the spacer system 100 in the closed position is further ensured.

The first element 101 and the spacer element 102 are centrally perforated so as to be able to insert the fastening means, in particular a screw 104 and a plug 103, in their central hole until fastening with the supporting structure 60, as shown in the figure 1.c, 1.d and in figure 1.e.

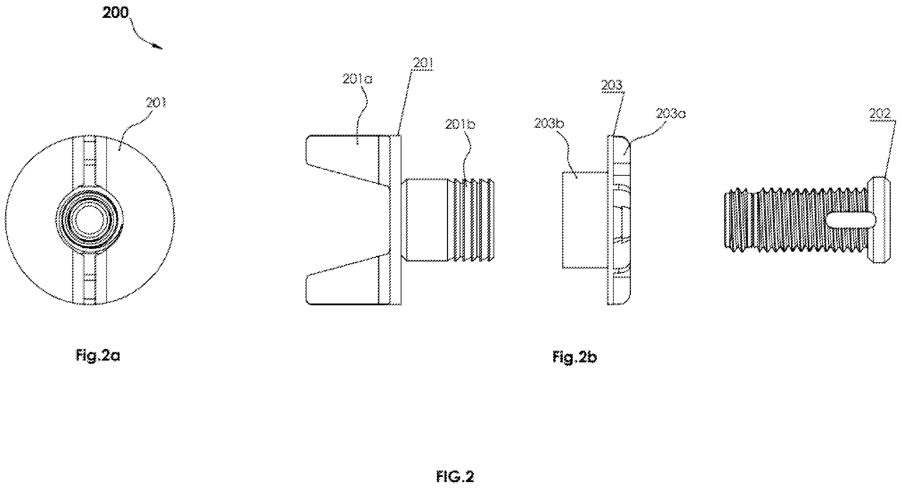

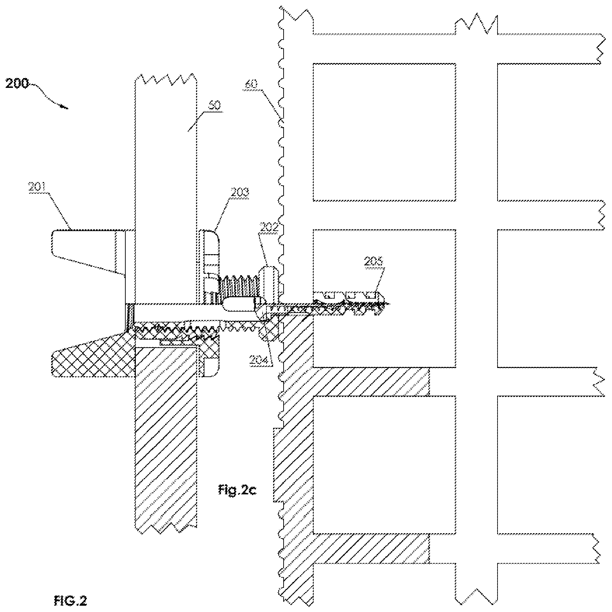

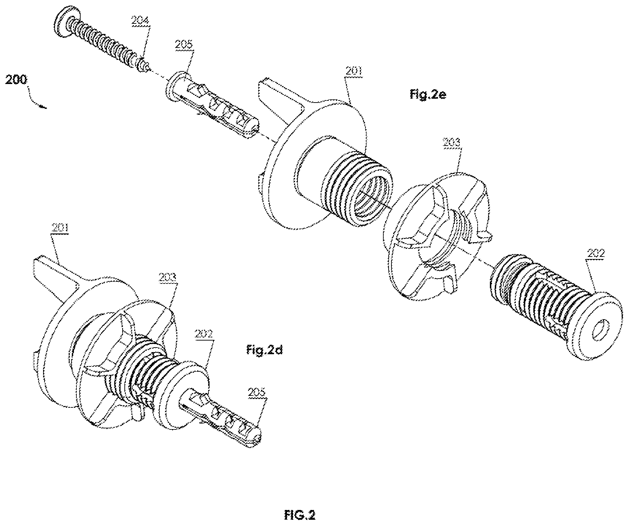

The spacer system 100 also includes the spacer element 102, having a perforated head and an externally threaded body, shown in side view in fig. 1.b. In use, the spacer system 100 is installed by performing the following steps:
- placing the first element 101 in a hole made in the panel 50;
- Fold up the pair of folding wings 110 placing them in the closed position;
- Screw the spacer element 102 to the threaded perforated head 120 of the locking element;
- Introduce the plug 103 through the central hole of the first element 101 and the spacer element 102, centering a hole in the supporting structure 60;
- Insert the screw 104 through the central hole of the first element 101 and the spacer element 102, fixing the plug 103 to the supporting structure 60
- adjust the position of the panel 50 and in particular its distance from the supporting structure 60 by suitably rotating the fins of the adjustment means 101a and at the same time adjusting the verticality or horizontality of the panel 50 itself. A second embodiment of the spacer system 200 is shown in figures 2.a, 2.b, 2.c, 2.d, 2.e. The first element 201 of the spacer system 200 is composed of an adjustment means 201a and a locking element 203, which are separate from each other and can be coupled in use by threading. In particular, the adjustment means 201a consists of a centrally perforated flange equipped on its first surface with a pair of adjustment fins and on a second surface thereof opposite to the first, comprises the locking element 201b which consists of a threaded body internally and externally, as shown in the side view of figure 2.b. The block element 203 consists, as shown in figure 2b, in a centrally perforated body equipped on a first surface of it with a plurality of protrusions which divide this first surface into a plurality of reinforcing sectors 203a, shown in figure 2. And. Figures 2d and 2e show in particular three sectors formed by protrusions that extend radially on the first surface of the block element 203.

On a second surface, the block element 203 comprises a cylindrical body 203b with a diameter such as to overlap, in use, the threaded body of the locking element 201b. The spacer element 202 is externally and centrally threaded hollow and drilled at one end, as shown in figure 2e.

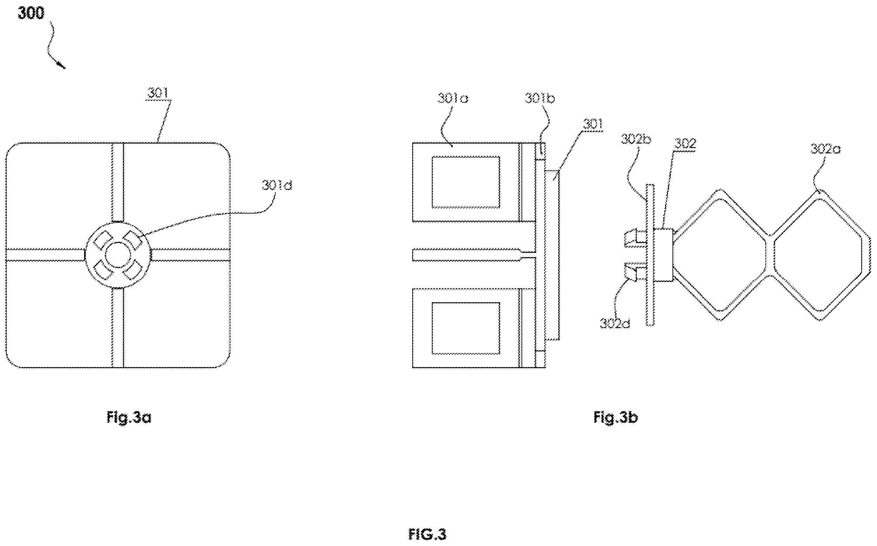

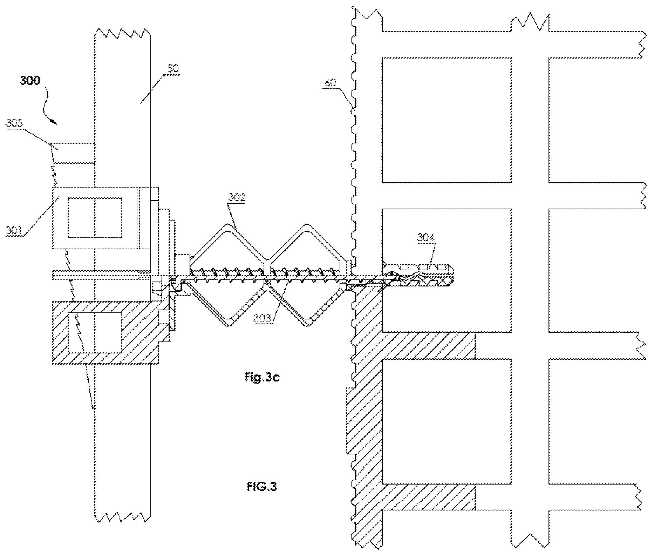

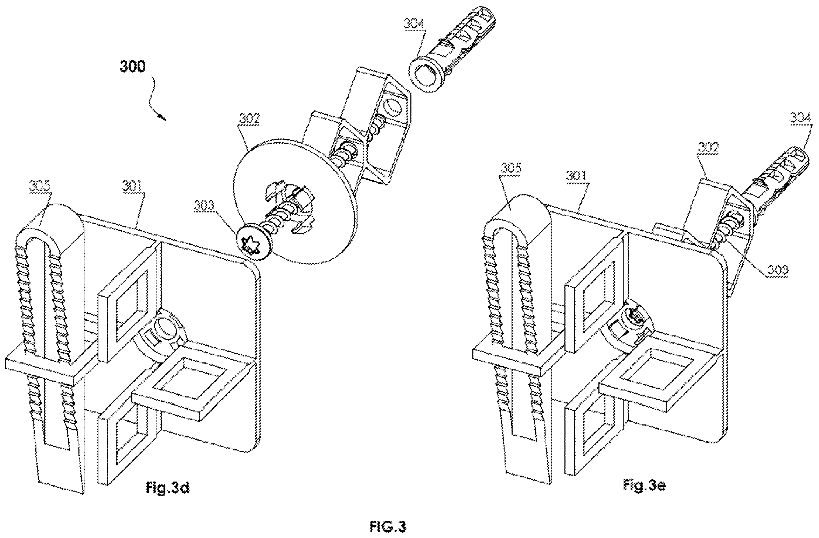

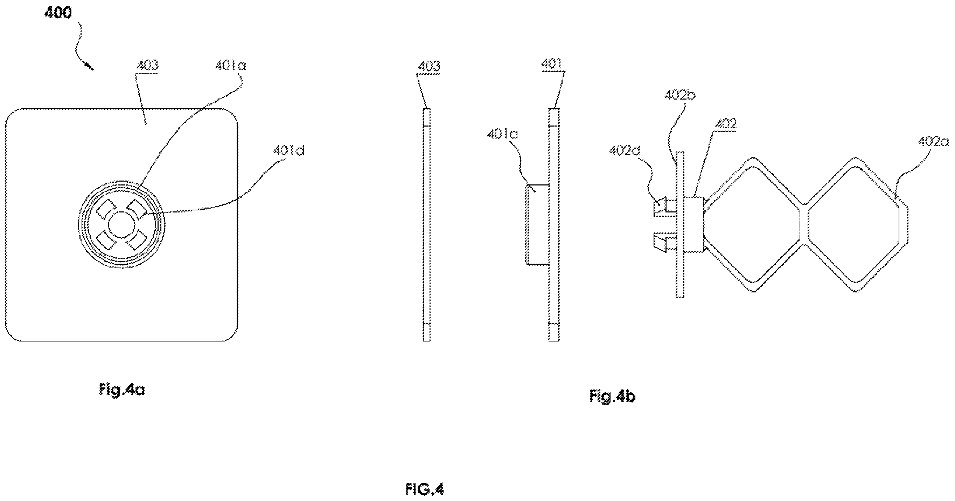

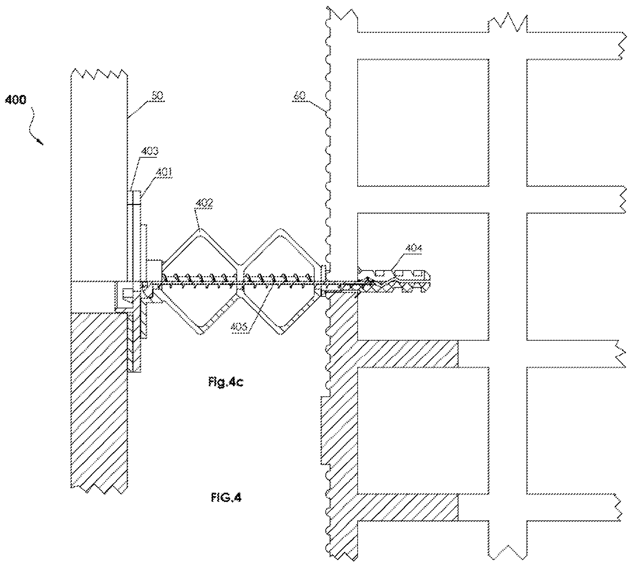

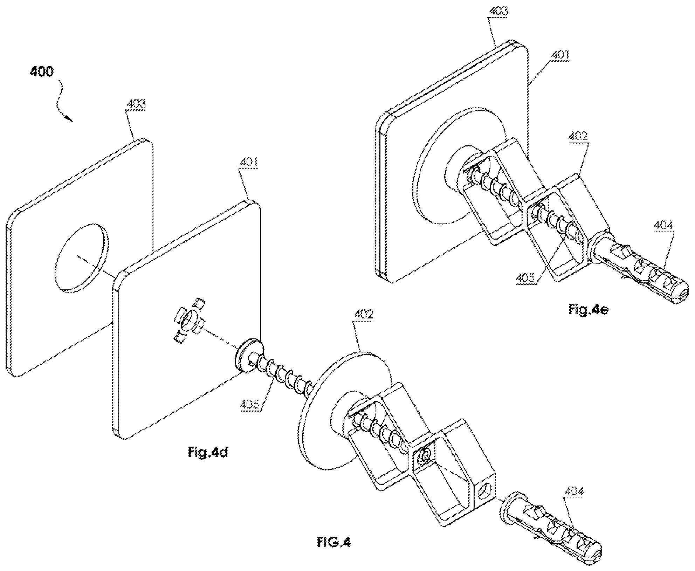

In use, the Spacer System 200 is installed by performing the following steps:
- Insert the adjustment means 201a into a hole made on the surface of the panel 50;
- Fix the locking element 203 to the adjustment means 201a;
- Insert the fastening means, in particular a dowel 205 and a screw 204, in the central hole of the adjustment means 201a and of the locking element 203, so that the spacer system 200 is fixed to the supporting structure 60;
- Adjust the distance between the panel 50 and the supporting structure 60 through the adjustment means 201a, while adjusting the verticality or horizontality of the panel 50 itself. According to a third embodiment of the invention, shown in figure 3, the spacer system 300 comprises a wedge 305 which can be inserted in at least one seat of the first element 301 and in particular in at least one seat obtained in the adjustment system 301a. The adjustment system 301a, in this third embodiment, consists of two pairs of perforated profiles, mutually orthogonal, protruding with respect to a flat surface of the first element 301 in which a rectangular opening has been obtained on the primary surface which it constitutes the seat in which the wedge 305 can be inserted. The wedge 305 has, on one side, a serrated profile, so as to increase its resistance to its removal from the opening, seat of the housing of the wedge 305. As shown in the side view in Figure 3b, the spacer element 302 consists of a centrally perforated body consisting of at least one roughly rhombic shaped profile 302a, preferably two contiguous rhombic shaped profiles connected to one of their vertex, and a perforated head 302b substantially flat. The perforated head 302b of the spacer element 302 comprises a plurality of snap teeth 302d, preferably four teeth, adapted to be fitted in use in corresponding seats 301d obtained in the first element 301. In use, the 300 spacer system is installed by performing the following steps:
- place at least two panels 50 with their corner ends in contact with the orthogonal protruding profiles 301a and resting on the surface 301b;
- insert the wedge 305 in the housing and lock the panels 50 thanks to the serrations placed on the external profile of the wedge 305 itself;
- insert a screw 303 in the central hole of the spacer element 302 before the interlocking union;
- insert a dowel 304 in the hole made in the supporting structure 60, insert the screw 303 into the dowel 304 in position at the end of the spacer element 302, all according to the assembly order shown in figure 3d;
- adjust the distance of the panel 50 from the surface of the supporting structure 60 by rotating the screw 303 while adjusting the verticality or horizontality of the panel 50 itself. Figure 4 shows a fourth embodiment of the spacer system 400 according to the invention which, in addition to the elements already illustrated, comprising an adhesive plate 403, a spacer element 402, similar in shape and structure to the spacer element 302, and a first substantially flat element 401, centrally perforated and comprising a plurality of locking seats 401b around the central hole. The locking seats, preferably four, are suitable for snap fastening of locking teeth 402d obtained on the head of the spacer element 402.

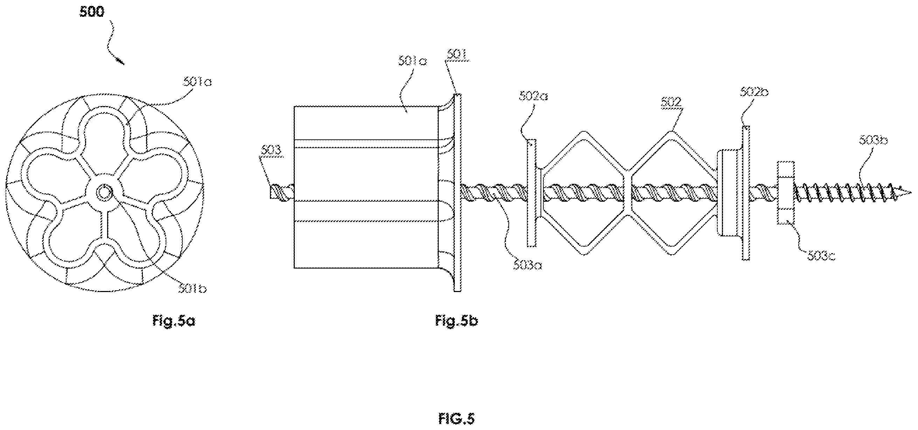

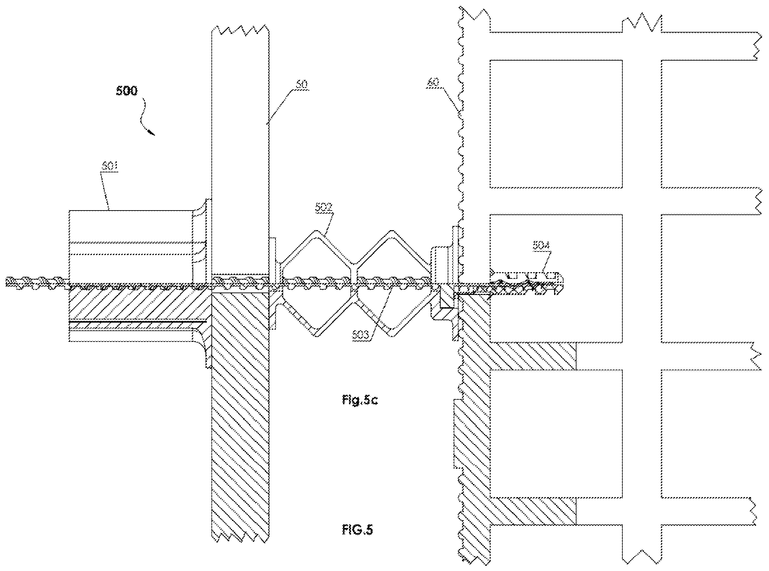

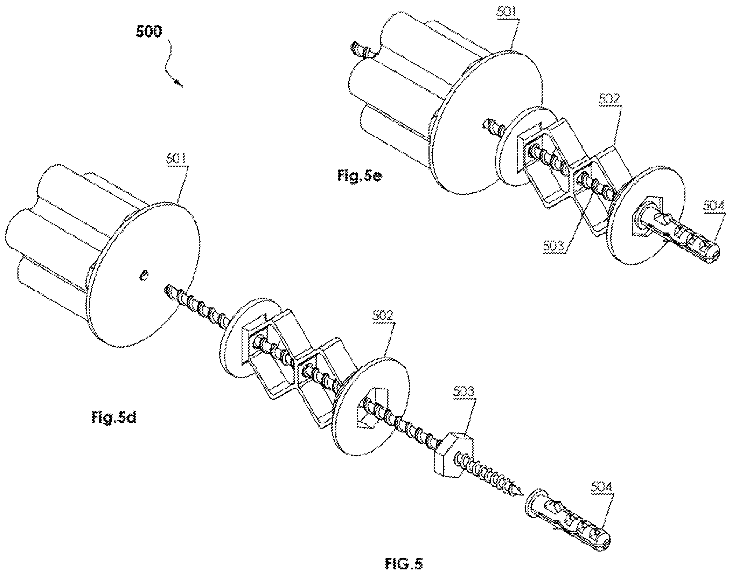

According to the fourth embodiment, the positioning system provides a hole of suitable size in a corner of the panel 50 which centers with a cylindrical part of the adjustment means 401a of the first element 401. In use, the spacer system 400 is installed by performing the following steps;
- making a hole of suitable size in a corner of the panel 50;
- centering the hole in the panel 50 with the cylindrical part of the adjustment means 401a;
- fixing by adhesiveness of the surface of the adhesive plate 403 to the panel 50;
- insert a screw 405 in the central hole of the spacer element 402 before the interlocking union;
- insert a dowel 404 in the hole made in the supporting structure 60 in position at the end of the spacer element 402, all according to the assembly order shown in figure 4d;
- adjust the mutual distance between the panel 50 and the supporting structure 60 by rotating the screw 405 while adjusting the verticality or horizontality of the panel 50 itself. Figure 5 shows a fifth embodiment of the spacing system 500 according to the invention, consisting of a first element 501 having in the center a threaded hole which engages on a screw 503. The screw 503 in turn has a first end 503a a pitch identical to that present on the first element 501 and at a second end 503b, opposite the first, has a pitch suitable for being screwed onto the dowel 504. Furthermore, the screw 503 has a flange 503c when the two ends meet, of hexagonal shape, and of such dimensions as to be able to use a mechanical wrench to be screwed in the second end 503b to the dowel 504.

The spacer system 500 comprises a spacer element 502 with a rhomboidal profile, similar to the embodiments of the spacer system 300 and 400 and indicated as 302 and 402. Unlike the previous embodiments, the spacer 502 has at one end a first simple flange 502a which in use comes into contact with the panel 50, and at one other end of it a second flange 502b having a hexagonal recess which fits on the hexagonal flange 503c and which in use comes into contact with the bearing structure 60. Between the first element 501 and the spacer element 502 in the part of the first simple flange 502a, the panel 50 is positioned.

The spacer system 500 can be used either by making a hole on the face of the panel 50, or by joining the edges of at least two panels 50. The tightening and adjustment take place through the rotation of the first element 501. In use, the 500 spacer system is installed by performing the following steps;
- make a hole of suitable size on the load-bearing structure 60, insert a plug 504 and fully screw the second end 503b of the screw 503 onto the plug 504;
- Insert the spacer element 502 from the second end 503b on the screw 503;
- Drill a hole of suitable size on panel 50 and insert it on the first end 503a of the screw 503 or join the corner ends of two panels 50 in contact with the screw 503 and lock with the first element 501 screwing onto the screw 503;
- adjust the mutual distance between the panel 50 and the supporting structure 60 by rotating the first element 501 while adjusting the verticality or horizontality of the panel 50 itself. In use, the spacer system 100,200,300,400,500 is placed between a panel 50 and a bearing structure 60, for example a masonry wall. On the panel 50, according to the chosen embodiment, holes of suitable diameter and distance must be made from each side of the corner. The protruding ends of the first element 101 and 201 of the spacer systems 100 and 200 described, upon completion of the cladding work, can be easily removed from the facade of the panel 50 with common cutting tools by cutting the tapered groove behind the head. According to an aspect of the invention, in the first embodiment of the spacer system 100, at the junction point between the adjustment means 101a and the locking element 101b there is a thickness taper, through a circular groove on the surface external to the perimeter, which it has the function of facilitating the tearing by laceration of the first element 101 from the rest of the body once the assembly and foaming in the gap between the rear panel 50 and the supporting structure 60 has been carried out. For the spacer systems 300 and 500 the protruding ends 301a and 503a on the panel 50 can be removed with common cutting tools.

According to the preferred embodiment, the dirst elements 101, 201, 203, 301, 401, 503 are able to be inserted into the hole or edge of the panel 50. A clamping or locking elements 101b, 203b, 401b is coupled to these elements. , 501b which makes it impossible to remove it from its seat again. The spacer element 102, 202, 302, 402, 502 is instead able to be fixed to the supporting structure 60. At least one hole is made on the supporting structure 60 into which a plug 103, 205, 304, 403, 504 and a screw 104, 204, 303, 405, 503 are inserted.

The spacer system 100, 200, 500 then allows the panel 50 to be adjusted in terms of verticality, distance from the supporting structure 60 and flatness, by rotating the adjustment fins or screwing them into the head placed on an external and visible side, opposite to the side oriented towards the supporting structure 60, of the panel 50. For the spacer system 300, 400, the adjustment of the verticality and the distance from the panel 50 with respect to the supporting structure 60 takes place by means of the rotation of the long screw by means of a common screwdriver tool.

According to an aspect of the invention, the space created between the wall and the back of the panel 50 following its application by means of the spacer system 100, 200, 300, 400, 500 is filled with filling polyurethane foam which acts as a joining element between both elements, allowing isolation and insulation of the coated walls.

Advantageously, the spacer system 100, 200, 300, 400, 500 is designed to simplify and optimize the assembly of rigid cladding panels for wall finishing in the building sector or wherever there is a need to control the verticality and flatness of surfaces made with the " use of panels directly on rigid load-bearing structures that need to be coated.

Furthermore, with the application solution provided by the present invention it is advantageously possible to fill the space created between the wall and the back of the panel with filling polyurethane foam which acts as a joining element of both elements, favoring insulation and insulation of the walls. coated, hides construction defects and does not limit the breathability of the walls. It lends itself as an excellent solution in cases of rising damp due to capillarity. Furthermore, the spacer system according to the invention is easy, simple, and quick to use.

Finally, the panel wall finishing system with the spacer system according to the invention is economical.

Finally, it is clear that modifications and variations may be made to the spacer system for positioning panels or sheets described and illustrated here without thereby departing from the protective scope of the present invention, as defined in the attached claims.

## Claims

1. Spacer system (100) for panels or slabs positioning, configured for an adjustable fixing of at least one panel (50) to a supporting structure (60), comprising:
- A first element (101) able to be placed in correspondence with at least a hole or between two edges of at least a panel (50), and comprising an adjustment mean (101a) for the adjustment of mutual distance between the panel (50) and the supporting structure (60), and a locking element (101b) configured to avoid the spacer system (100) from slipping off the panel (50) ;
- A spacer element (102) having a perforated head and a through hole, able to be fixed to the supporting structure (60);
- Fastening means, configured to be inserted in at least one through hole of the first element (101) and of the spacer element (102);
**Characterized in that** said first element (101) comprises an adjustment mean (101a) consisting of a plate having two protruded portions, configured to rotate adjusting the distance between the first element (101) and the spacer element (102), and consequently the distance between the panel (50) and the supporting structure (60) bound to them, and **in that** said locking element (101b) consists in a pair of folding wings (110) able to be positioned alternatively in a first open position, in which the first element (101) is inserted in a hole of the panel (50), and in a second closed position, in which said pair of folding wings (110) is positioned parallel to the panel (50), to prevent the first element (101) from slipping out of the hole.

2. Spacer system (100, 200, 300, 400, 500) for panels or slabs positioning according to claim 1, **characterized in that** said pair of folding wings (110) consists of two folding wings extending from a first end of the locking element (101b) integral with the adjustment mean (101a), to a second end having a threaded perforated head (120), each folding wing of the pair of folding wings (110) comprising a first substantially flat surface, and a second surface provided with a plurality of protrusions (110a, 110b) able to be interlocked together and with a pair of intermediate grooves (110c), able to allow each wing to be folded back on itself in a closed position.

3. Spacer system (100, 200, 300, 400, 500) for panels or slabs positioning according to claim 1, **characterized in that** said first element (101) is centrally perforated and comprises at its first end the adjustment mean (101a), consisting of a plate equipped with adjustment fins, and at its second end, opposite to the first end, with a internally threaded perforated head (120) configured for inserting the spacer element (102), said internally threaded perforated head (120) being equipped with a pair of interlocking elements (111a) configured to fit into at least one housing (111b) placed on a lateral surface of the first end of the locking element (101b), when the pair of folding wings (110) is in the closed position.

4. Method for installing a spacer system (100) according claim 1, **characterized in** comprising the following steps of:
- Placing a first element (101) in a panel (50) hole or between a pair of panels;
- Folding the pair of folding wings (110) in the closed position;
- Screwing the spacer element (102) to the internally threaded perforated head (120);
- Inserting a plug (103) through the central hole of the first element (101) and of the spacing element (102), centring a hole of the supporting structure (60);
- Inserting a screw (104) through the central hole of the first element (101) and of the spacer element (102), fixing the plug (103) to the supporting structure (60);
- Adjusting the distance between the panel (50) and the supporting structure (60) by rotating the fins of the adjustment means (101a) and at the same time adjusting the verticality or horizontality of the panel (50).

## Patentansprüche

1. Abstandshaltersystem (100) zur Positionierung von Platten oder Fliesen, das für eine einstellbare Befestigung mindestens einer Platte (50) an einer Tragstruktur (60) ausgebildet ist und Folgendes umfasst:
• ein erstes Element (101), das im Bereich mindestens eines Lochs oder zwischen zwei Kanten mindestens einer Platte (50) angeordnet werden kann und ein Einstellmittel (101a) zur Einstellung des gegenseitigen Abstands zwischen der Platte (50) und der Tragstruktur (60) sowie ein Verriegelungselement (101b) aufweist, das dazu ausgebildet ist, ein Abrutschen des Abstandshaltersystems (100) von der Platte (50) zu verhindern;
• ein Abstandshalterelement (102) mit einem gelochten Kopf und einer Durchgangsbohrung, das an der Tragstruktur (60) befestigt werden kann;
• Befestigungsmittel, die dazu ausgebildet sind, in mindestens eine Durchgangsbohrung des ersten Elements (101) und des Abstandshalterelements (102) eingesetzt zu werden;
**dadurch gekennzeichnet, dass** das erste Element (101) das Einstellmittel (101a) umfasst, das aus einer Platte mit zwei vorspringenden Bereichen besteht, die dazu ausgebildet sind, sich zu drehen, um den Abstand zwischen dem ersten Element (101) und dem Abstandshalterelement (102) und folglich den Abstand zwischen der Platte (50) und der mit diesen verbundenen Tragstruktur (60) einzustellen, und dass das Verriegelungselement (101b) aus einem Paar klappbarer Flügel (110) besteht, die wahlweise in einer ersten geöffneten Stellung, in der das erste Element (101) in ein Loch der Platte (50) eingesetzt ist, und in einer zweiten geschlossenen Stellung positioniert werden können, in der das Paar klappbarer Flügel (110) parallel zur Platte (50) angeordnet ist, um zu verhindern, dass das erste Element (101) aus dem Loch herausrutscht.

2. Abstandshaltersystem (100, 200, 300, 400, 500) zur Positionierung von Platten oder Fliesen nach Anspruch 1, **dadurch gekennzeichnet, dass** das Paar klappbarer Flügel (110) aus zwei klappbaren Flügeln besteht, die sich von einem ersten Ende des Verriegelungselements (101b), das mit dem Einstellmittel (101a) einstückig ausgebildet ist, bis zu einem zweiten Ende mit einem mit einem Innengewinde versehenen, gelochten Kopf (120) erstrecken, wobei jeder klappbare Flügel des Paars klappbarer Flügel (110) eine erste, im Wesentlichen ebene Oberfläche und eine zweite Oberfläche mit einer Vielzahl von Vorsprüngen (110a, 110b) aufweist, die dazu ausgebildet sind, miteinander in Eingriff zu treten, sowie ein Paar zwischenliegender Nuten (110c) aufweist, die es ermöglichen, jeden Flügel in einer geschlossenen Stellung auf sich selbst zurückzuklappen.

3. Abstandshaltersystem (100, 200, 300, 400, 500) zur Positionierung von Platten oder Fliesen nach Anspruch 1, **dadurch gekennzeichnet, dass** das erste Element (101) zentral durchbohrt ist und an seinem ersten Ende das Einstellmittel (101a), bestehend aus einer mit Einstellrippen versehenen Platte, und an seinem zweiten, dem ersten Ende gegenüberliegenden Ende einen mit einem Innengewinde versehenen, gelochten Kopf (120) aufweist, der dazu ausgebildet ist, das Abstandshalterelement (102) aufzunehmen, wobei der mit einem Innengewinde versehene, gelochte Kopf (120) mit einem Paar ineinandergreifender Elemente (111a) versehen ist, die dazu ausgebildet sind, in mindestens eine Aufnahme (111b) einzugreifen, die an einer Seitenfläche des ersten Endes des Verriegelungselements (101b) ausgebildet ist, wenn sich das Paar klappbarer Flügel (110) in der geschlossenen Stellung befindet.

4. Verfahren zur Installation eines Abstandshaltersystems (100) nach Anspruch 1, **dadurch gekennzeichnet, dass** es die folgenden Schritte umfasst:
• Anordnen eines ersten Elements (101) in einem Loch der Platte (50) oder zwischen einem Paar von Platten;
• Klappen des Paars klappbarer Flügel (110) in die geschlossene Stellung;
• Einschrauben des Abstandshalterelements (102) in den mit einem Innengewinde versehenen, gelochten Kopf (120);
• Einsetzen eines Dübels (103) durch die zentrale Bohrung des ersten Elements (101) und des Abstandshalterelements (102), wobei der Dübel gegenüber einem Loch der Tragstruktur (60) zentriert wird;
• Einsetzen einer Schraube (104) durch die zentrale Bohrung des ersten Elements (101) und des Abstandshalterelements (102), um den Dübel (103) an der Tragstruktur (60) zu befestigen;
• Einstellen des Abstands zwischen der Platte (50) und der Tragstruktur (60) durch Drehen der Rippen des Einstellmittels (101a) und gleichzeitiges Einstellen der Vertikalität oder Horizontalität der Platte (50).

## Revendications

1. Système d'entretoisement (100) destiné au positionnement de panneaux ou de dalles, configuré pour une fixation réglable d'au moins un panneau (50) à une structure de support (60), comprenant:
• un premier élément (101) apte à être positionné au niveau d'au moins un trou ou entre deux bords d'au moins un panneau (50), et comprenant un moyen de réglage (101a) destiné au réglage de la distance mutuelle entre le panneau (50) et la structure de support (60), ainsi qu'un élément de verrouillage (101b) configuré pour empêcher le système d'entretoisement (100) de se désengager du panneau (50);
• un élément d'entretoisement (102) présentant une tête perforée et un trou traversant, apte à être fixé à la structure de support (60);
• des moyens de fixation configurés pour être insérés dans au moins un trou traversant du premier élément (101) et de l'élément d'entretoisement (102);
**caractérisé en ce que** ledit premier élément (101) comprend ledit moyen de réglage (101a) constitué d'une plaque présentant deux parties saillantes, configurées pour tourner afin de régler la distance entre le premier élément (101) et l'élément d'entretoisement (102), et, par conséquent, la distance entre le panneau (50) et la structure de support (60) qui leur sont associés, et **en ce que** ledit élément de verrouillage (101b) consiste en une paire d'ailes rabattables (110) aptes à être positionnées alternativement dans une première position ouverte, dans laquelle le premier élément (101) est inséré dans un trou du panneau (50), et dans une seconde position fermée, dans laquelle ladite paire d'ailes rabattables (110) est positionnée parallèlement au panneau (50), afin d'empêcher le premier élément (101) de sortir du trou.

2. Système d'entretoisement (100, 200, 300, 400, 500) destiné au positionnement de panneaux ou de dalles selon la revendication 1, **caractérisé en ce que** ladite paire d'ailes rabattables (110) consiste en deux ailes rabattables s'étendant d'une première extrémité de l'élément de verrouillage (101b), solidaire du moyen de réglage (101a), jusqu'à une seconde extrémité présentant une tête perforée filetée (120), chaque aile rabattable de ladite paire d'ailes rabattables (110) comprenant une première surface sensiblement plane et une seconde surface munie d'une pluralité de saillies (110a, 110b) aptes à s'emboîter les unes avec les autres, ainsi que d'une paire de rainures intermédiaires (110c), aptes à permettre à chaque aile d'être rabattue sur elle-même dans une position fermée.

3. Système d'entretoisement (100, 200, 300, 400, 500) destiné au positionnement de panneaux ou de dalles selon la revendication 1, **caractérisé en ce que** ledit premier élément (101) est percé centralement et comprend, au niveau de sa première extrémité, le moyen de réglage (101a), constitué d'une plaque munie d'ailettes de réglage, et, au niveau de sa seconde extrémité, opposée à la première extrémité, une tête perforée taraudée intérieurement (120) configurée pour recevoir l'élément d'entretoisement (102), ladite tête perforée taraudée intérieurement (120) étant munie d'une paire d'éléments d'emboîtement (111a) configurés pour s'engager dans au moins un logement (111b) ménagé sur une surface latérale de la première extrémité de l'élément de verrouillage (101b), lorsque la paire d'ailes rabattables (110) est dans la position fermée.

4. Procédé d'installation d'un système d'entretoisement (100) selon la revendication 1, ****caractérisé en ce qu'****il comprend les étapes suivantes :
• placer un premier élément (101) dans un trou du panneau (50) ou entre une paire de panneaux ;
• rabattre la paire d'ailes rabattables (110) dans la position fermée ;
• visser l'élément d'entretoisement (102) dans la tête perforée taraudée intérieurement (120) ;
• insérer une cheville (103) à travers le trou central du premier élément (101) et de l'élément d'entretoisement (102), en la centrant par rapport à un trou de la structure de support (60) ;
• insérer une vis (104) à travers le trou central du premier élément (101) et de l'élément d'entretoisement (102), afin de fixer la cheville (103) à la structure de support (60) ;
• régler la distance entre le panneau (50) et la structure de support (60) en faisant tourner les ailettes du moyen de réglage (101a) et, simultanément, régler la verticalité ou l'horizontalité du panneau (50).
